# EUROPEAN PATENT SPECIFICATION

(11) **EP 3 305 503 B1**
(45) Date of publication and mention of the grant of the patent: **11.09.2019**
(21) Application number: 17001621.6
(22) Date of filing: 02.10.2017
(51) Int. Cl.: B29C 49/04, B29L 23/00, B29L 31/00, B29C 49/78

(54) **EXTRUSION AND BLOW MOLDING MACHINE WITH CONTROL DEVICE**
EXTRUSIONS- UND BLASFORMMASCHINE MIT STEUERUNGSVORRICHTUNG
MACHINE D'EXTRUSION ET DE MOULAGE PAR SOUFFLAGE AVEC DISPOSITIF DE COMMANDE

(30) Priority: 04.10.2016 IT 201600099416
(43) Date of publication of application: 11.04.2018
(73) Proprietor: S.T. Soffiaggio Tecnica S.r.l., 20900 Monza (MB) (IT)
(72) Inventor: Graziadei, Martin, 6900 Lugano (CH)
(74) Representative: Forattini, Amelia

(56) References cited:
- DE-B3-102008 052 608
- JP-A- H0 999 481
- JP-A- H09 234 783
- US-B1- 6 645 406

## Description

The present invention relates to an extrusion and blow molding machine with control device.

Related prior art is described in the patent documents JP-H09-99481A, JP-H09-234783A, DE102008-052608B3 and US6645406B1.

As is known, blow molding allows to obtain hollow plastic products.

Blow molding occurs by insufflating compressed air into a parison which is arranged in a hollow mold, so that the object, by inflating, assumes the shape of the internal walls of the mold. The mold is then opened to extract the finished object.

In the production of parts, such as tubes having a complex shape, the parison extruded by the extrusion head is attracted into the mold cavity by suction.

During the suction step there are at least two elements that can vary the length of the extruded tubular member: the amount of vacuum that is applied to the mold, at the opposite end with respect to the one for the insertion of the parison, and the amount of compressed air that is introduced in the extruded tube (support air) with the purpose of preventing it from closing onto itself when it is affected by the vacuum flow.

The point where the extrusion of the tube occurs is generally barely visible.

In the prior art, since it is not possible to perform any variation of the parameters during the short extrusion time of the parison (2 to 10 seconds in general), generally the parameters are adjusted each time after a piece is produced. It is therefore up to the operator to find the ideal compromise between the amount of suction and the amount of support air.

Any variation of the parameters, caused by factors that are external to the machine, entails a new adjustment of the parameters and consequently an inevitable production of reject parts.

In general, excessive suction changes the length of the extruded tubular element by elongating it. The tube is in fact "drawn" by the vacuum flow.

Insufficient suction in general changes the length of the extruded tubular member by shortening it. The tube is in fact "pushed" into the cavity.

An inadequate quantity of support air causes the walls of the tube to be stuck together.

Lack of insertion of the tubular member in the cavity causes an accumulation of plasticized material which must be removed manually, and this sometimes creates great problems.

Automatic dynamic systems for the control of this important step of the machine cycle are not known.

Currently, the operator simply waits for the end of the cycle and performs the adjustments in a step that follows the extraction of the manufactured part.

This is done because the extrusion of the parison occurs in a closed cavity, so there is no practical way to visualize this sequence of the cycle.

The only check that everything is proceeding correctly during this step is by means of the empty space that exists between the extrusion head and the inlet of the cavity.

JPH0999481 discloses a control system having a camera that detects the bending of a parison extruded from a die head. The die is moved to adjust and control the thickness irregularity of the parison.

The aim of the present invention is to provide an extrusion and blow molding machine with control device that overcomes the drawbacks of the cited prior art.

Within the scope of this aim, an object of the invention is to provide an extrusion and blow molding machine with control device that allows to check, in real time, whether the insertion of the parison in the mold cavity occurs correctly.

Another object of the invention is to provide a machine with a control device that allows a dynamic variation of the suction and/or support air parameters.

Another object is to provide a control device that does not interfere with the other components of the machine.

This aim and these and other objects which will become better apparent hereinafter are achieved by an extrusion and blow molding machine with control device, comprising an extrusion head adapted to form a parison at a mold which has a mold cavity wherein the part is formed by means of air suction and insufflation; said machine being characterized in that it comprises a video control device that is configured to check the proper insertion of said parison in said mold cavity.

Further characteristics and advantages will become better apparent from the description of preferred but not exclusive embodiments of the invention, illustrated by way of non-limiting example in the accompanying drawings, wherein:

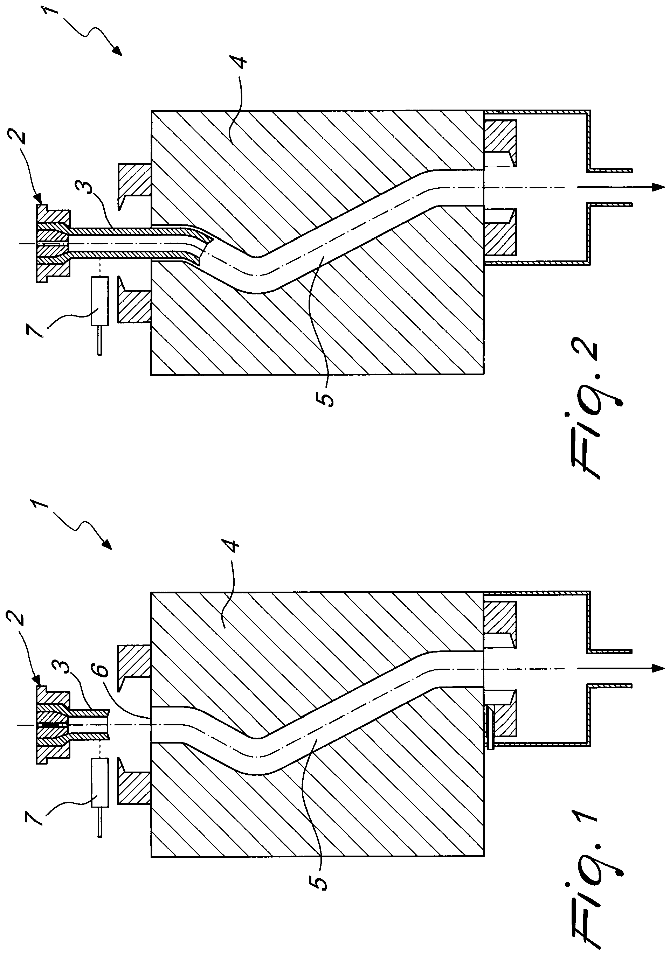

Figure 1 is a schematic sectional side view of the extrusion and blow molding machine with control device according to the present invention;
Figure 2 is a view, similar to the preceding one, of the machine during the initial step of the extrusion of the parison;

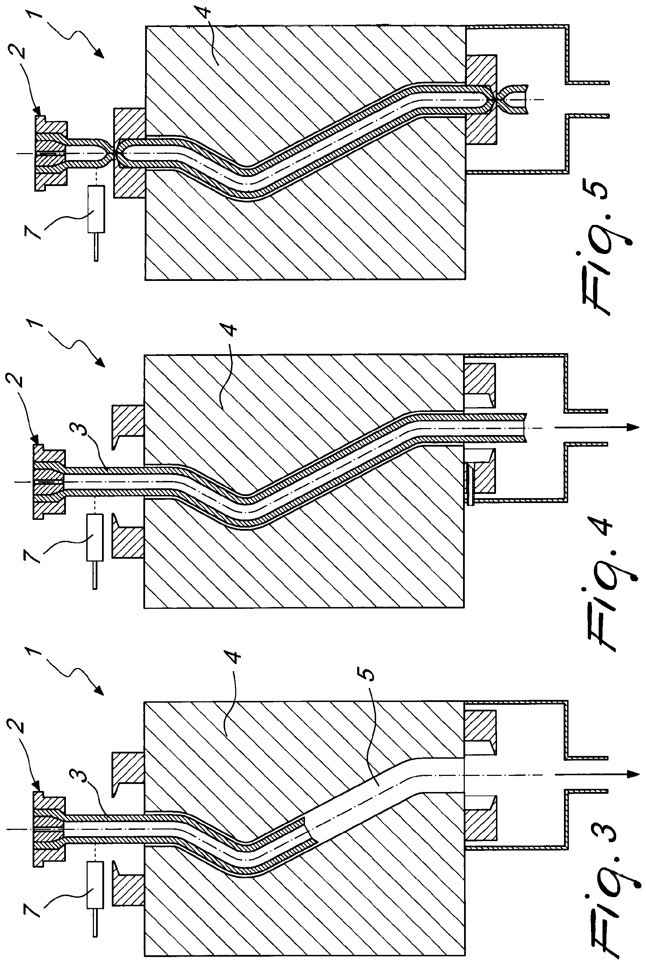

Figures 3-5 are views, similar to the preceding one, of the subsequent steps of parison extrusion and part forming.

With reference to the cited figures, the extrusion and blow molding machine according to the invention, globally designated by the reference numeral 1, has an extrusion head 2 which is adapted to generate a parison 3 at a mold 4 which is provided with a mold cavity 5 in which the part is formed by suction and subsequent air insufflation, in a per se known manner.

According to the present invention, in a region which is external to the mold 4, upstream of the inlet 6 of the mold cavity 5 and downstream of the extrusion and blow molding head 2, there is a video control device, designated by the reference numeral 7.

The video control device 7 is arranged laterally with respect to the exit position of the parison 3 and is configured to measure the diameter of the parison 3 prior to its entry in the mold cavity 5.

The video control device 7 is connected to the control system of the machine 1 in order to allow a dynamic variation of the suction and/or support air parameters.

If the diameter of the extruded parison varies, becoming too small, this means that the vacuum is aspirating too much. At this point the system can adjust the vacuum flow by reducing it, and/or by increasing the support air flow.

If the diameter of the parison varies, becoming too large, this means that the vacuum is not aspirating enough. The system at this point can adjust the vacuum flow by increasing it and/or by reducing the support air flow.

The control device can also check for any failed insertion of the parison 3 in the mold cavity 5.

If the diameter of the tubular member increases beyond a certain preset limit, this means that certainly the parison has not entered the cavity correctly. At this point the system interrupts the extrusion of the parison, preventing it from accumulating between the extrusion head 2 and the mold 4, and therefore avoiding to ruin components of the extrusion head and/or of the mold, which would force the operator to stop the system in order to clean the entire area where the accumulation has occurred.

In practice it has been found that the invention achieves the intended aim and objects, having provided a machine equipped with a control device that allows to check the correct insertion of the parison in the mold cavity and a dynamic variation of the suction and/or support air parameters.

The materials used, as well as the dimensions, may of course be any according to the requirements and the state of the art.

## Claims

1. An extrusion and blow molding machine with control device, comprising an extrusion head (2) adapted to form a parison (3) at a mold (4) which has a mold cavity (5) wherein the part is formed by means of air suction and insufflation; said machine being **characterized in that** it comprises a video control device (7) that is configured to check the proper insertion of said parison (3) in said mold cavity (5).

2. The machine according to claim 1, **characterized in that** said video control device (7) is arranged in a region which is external to said mold (4), upstream of the inlet (6) of said mold cavity (5) and downstream of said extrusion head (2).

3. The machine according to claim 1, **characterized in that** said video control device (7) is arranged laterally with respect to the exit position of said parison (3) from said extrusion head (2).

4. The machine according to claim 1, **characterized in that** said video control device (7) is configured to measure the diameter of said parison (3) prior to its entry in said mold cavity (5).

5. The machine according to claim 1, **characterized in that** said video control device (7) is connected to a machine control system to allow a dynamic variation of the air suction and insufflation parameters.

## Patentansprüche

1. Eine Extrusions- und Blasformmaschine mit Steuerungsvorrichtung, die einen Extrusionskopf (2) umfasst, ausgebildet, um einen Vorformling (3) an einer Form (4) zu bilden, die einen Formenhohlraum (5) hat, wobei das Teil durch Luftansaugen und Einblasen geformt wird; wobei die Maschine **dadurch gekennzeichnet ist, dass** sie eine Videosteuerungsvorrichtung (7) umfasst, die ausgebildet ist, um das korrekte Einsetzen des Vorformlings (3) in den Formenhohlraum (5) zu überprüfen.

2. Die Maschine gemäß Anspruch 1, **dadurch gekennzeichnet, dass** die Videosteuerungsvorrichtung (7) in einem Bereich angeordnet ist, der außerhalb der Form (4), stromaufwärts vom Einlass (6) des Formenhohlraums (5) und stromabwärts von dem Extrusionskopf (2), liegt.

3. Die Maschine gemäß Anspruch 1, **dadurch gekennzeichnet, dass** die Videosteuerungsvorrichtung (7) seitlich von der Austrittsposition des Vorformlings (3) aus dem Extrusionskopf (2) angeordnet ist.

4. Die Maschine gemäß Anspruch 1, **dadurch gekennzeichnet, dass** die Videosteuerungsvorrichtung (7) ausgebildet ist, um den Durchmesser des Vorformlings (3) vor seinem Eintritt in den Formenhohlraum (5) zu messen.

5. Die Maschine gemäß Anspruch 1, **dadurch gekennzeichnet, dass** die Videosteuerungsvorrichtung (7) mit einem Maschinensteuerungssystem verbunden ist, um eine dynamische Veränderung der Luftansaug- und Einblasparameter zu ermöglichen.

## Revendications

1. Machine d'extrusion et de moulage par soufflage avec un dispositif de commande, comprenant une tête d'extrusion (2) adaptée pour former une paraison (3) au niveau d'un moule (4) présentant une cavité de moule (5) dans laquelle la pièce est formée par aspiration et insufflation d'air; ladite machine étant **caractérisée en ce qu'**elle comprend un dispositif de commande vidéo (7) configuré pour vérifier l'insertion correcte de ladite paraison (3) dans ladite cavité de moule (5).

2. Machine selon la revendication 1, **caractérisée en ce que** ledit dispositif de commande vidéo (7) est disposé dans une région externe audit moule (4), en amont de l'entrée (6) de ladite cavité de moule (5) et en aval de ladite tête d'extrusion (2).

3. Machine selon la revendication 1, **caractérisée en ce que** ledit dispositif de commande vidéo (7) est disposé latéralement par rapport à la position de sortie de ladite paraison (3) à partir de ladite tête d'extrusion (2).

4. Machine selon la revendication 1, **caractérisée en ce que** ledit dispositif de commande vidéo (7) est configuré pour mesurer le diamètre de ladite paraison (3) avant l'entrée de celle-ci dans ladite cavité de moule (5).

5. Machine selon la revendication 1, **caractérisée en ce que** ledit dispositif de commande vidéo (7) est relié à un système de commande de machine pour permettre une variation dynamique des paramètres d'aspiration et d'insufflation d'air.
